# EUROPÄISCHE PATENTSCHRIFT

(11) **EP 4 223 676 B1**
(45) Veröffentlichungstag und Bekanntmachung des Hinweises auf die Patenterteilung: **02.04.2025**
(21) Anmeldenummer: 23154865.2
(22) Anmeldetag: 03.02.2023
(51) Int. Cl.: B65G 54/02, B65G 47/90, B25J 17/00

(54) **HANDHABUNGSVORRICHTUNG ZU EINER HANDHABUNG VON PRODUKTEN UND VERFAHREN ZU EINER HANDHABUNG VON PRODUKTEN MITTELS EINER HANDHABUNGSVORRICHTUNG**
HANDLING DEVICE FOR HANDLING PRODUCTS AND METHOD FOR HANDLING PRODUCTS BY MEANS OF A HANDLING DEVICE
DISPOSITIF DE MANIPULATION POUR LA MANIPULATION DE PRODUITS ET PROCÉDÉ DE MANIPULATION DE PRODUITS AU MOYEN D'UN DISPOSITIF DE MANIPULATION

(30) Priorität: 04.02.2022 DE 102022102694
(43) Veröffentlichungstag der Anmeldung: 09.08.2023
(73) Patentinhaber: Syntegon Technology GmbH, 71332 Waiblingen (DE)
(72) Erfinder: Schwarz, Sebastian, 91616 Neusitz (DE); Kleinert, Marcus, 74599 Wallhausen (DE)
(74) Vertreter: Novagraaf Group

(56) Entgegenhaltungen:
- WO-A1-2020/243814
- DE-A1- 102020 120 280
- DE-A1- 102020 120 294
- US-A1- 2020 030 995

## Beschreibung

### Stand der Technik

Die Erfindung betrifft eine Handhabungsvorrichtung nach dem Oberbegriff des Anspruchs 1 und ein Verfahren zu einem Transportieren von Produkten nach dem Oberbegriff des Anspruchs 9.

Derartige Handhabungsvorrichtungen und Verfahren sind bereits aus WO 2018/176137 A1 bekannt. Nachteilig an diesen Handhabungsvorrichtungen und Verfahren ist, dass das Halteelement relativ zu dem Handhabungselement derart gelagert ist, dass das Halteelement relativ zu dem Handhabungselement lediglich Translationsbewegungen ausführen kann. Insbesondere ist es nicht möglich ein Drehmoment auf das Halteelement zu übertragen, um das Halteelement relativ zu dem Handhabungselement zu verdrehen. Dadurch sind Bewegungsmöglichkeiten des Halteelements relativ zu dem Handhabungselement und somit nachteilig auch ein Funktionsbereich der bekannten Handhabungsvorrichtungen und Verfahren eingeschränkt. Diese Nachteile werden von der vorliegenden Erfindung überwunden.

Des Weiteren sind aus DE 199 60 487 A1, EP 4 005 742 A1, WO 2017/036812 A1 und DE 10 2018 216 393 B4 ebenfalls bereits Handhabungsvorrichtungen und Verfahren zu einer Handhabung von Produkten bekannt.

Ferner ist aus DE 20 2016 101 453 U1 bereits eine Handhabungsvorrichtung zu einer Handhabung von Produkten bekannt, wobei die Handhabungsvorrichtung zumindest eine Handhabungseinheit umfasst, die zumindest ein Handhabungselement und zumindest ein Halteelement, welches relativ zu dem Handhabungselement beweglich gelagert ist, und eine Orientierungseinheit umfasst, mittels welcher eine Winkelorientierung zwischen dem Handhabungselement und dem Halteelement einstellbar ist. Ein Verfahren zu einer Handhabung von Produkten mittels der aus der DE 20 2016 101 453 U1 bereits bekannten Handhabungsvorrichtung ist ebenfalls bereits aus der DE 20 2016 101 453 U1 bekannt.

Ferner sind aus WO 2020/243814 A1 und DE 10 2020 120 294 A1 ebenfalls Handhabungsvorrichtungen sowie Verfahren zu einer Handhabung von Produkten bekannt, wobei die WO 2020/243814 A1 die Merkmale des Oberbegriffs des Anspruchs 1 sowie des Oberbegriffs des Anspruchs 9 offenbart.

Die Aufgabe der Erfindung besteht insbesondere darin, eine gattungsgemäße Handhabungsvorrichtung und ein gattungsgemäßes Verfahren mit verbesserten Eigenschaften hinsichtlich einer flexiblen Handhabung von Produkten bereitzustellen. Die Aufgabe wird erfindungsgemäß durch die Merkmale des Anspruchs 1 bzw. des Anspruchs 9 gelöst, während vorteilhafte Ausgestaltungen und Weiterbildungen der Erfindung den Unteransprüchen entnommen werden können.

### Offenbarung der Erfindung

Die Erfindung geht aus von einer Handhabungsvorrichtung zu einer Handhabung von Produkten, mit zumindest einer Handhabungseinheit, die zumindest ein Handhabungselement und zumindest ein Halteelement, welches relativ zu dem Handhabungselement beweglich gelagert ist, und eine Orientierungseinheit umfasst, mittels welcher eine Winkelorientierung zwischen dem Handhabungselement und dem Halteelement einstellbar ist, wobei die Orientierungseinheit zumindest ein Einstellelement aufweist, wobei durch eine Bewegung des Einstellelements relativ zu dem Handhabungselement die Winkelorientierung zwischen dem Handhabungselement und dem Halteelement einstellbar ist, und mit einer als Planarantrieb ausgebildeten Antriebseinheit zu einem Antrieb des Einstellelements.

Es wird vorgeschlagen, dass die Orientierungseinheit zumindest ein Drehmomentübertragungselement aufweist, welches drehfest mit dem Einstellelement verbunden ist, wobei das Drehmomentübertragungselement als Kardanwelle oder als flexible, insbesondere elastisch biegbare, Welle ausgebildet ist. Die Handhabungseinheit ist vorzugsweise dazu vorgesehen, Produkte zu transportieren, zu handhaben, beispielsweise zu drehen, zu greifen, zu heben, zu senken oder dergleichen und/oder zu bearbeiten. Bevorzugt ist das Halteelement relativ zu dem Handhabungselement drehbar gelagert. Zusätzlich ist denkbar, dass das Halteelement relativ zu dem Handhabungselement translatorisch bewegbar ist. Es ist jedoch auch denkbar, dass das Halteelement relativ zu dem Handhabungselement lediglich drehbar gelagert ist. Bevorzugt ist das Halteelement über zumindest ein weiteres Bauteil der Handhabungseinheit mit dem Handhabungselement, vorzugsweise mechanisch, verbunden, wobei das Halteelement insbesondere an dem weiteren Bauteil gelagert ist. Es ist alternativ jedoch auch denkbar, dass das Halteelement an dem Handhabungselement, insbesondere unmittelbar, anliegend beweglich gelagert ist.

Bevorzugt umfasst die Handhabungseinheit zumindest ein Plattformelement. Bevorzugt ist das Plattformelement, insbesondere translatorisch, relativ zu dem Handhabungselement bewegbar. Bevorzugt ist das Plattformelement in unterschiedlichen Abständen und Positionen relativ zu dem Handhabungselement anordenbar. Vorzugsweise ist das Plattformelement über zumindest ein Verbindungselement der Handhabungseinheit, an dem Handhabungselement, insbesondere translatorisch, gelagert. Das zumindest eine Verbindungselement ist beispielsweise als Strebe oder dergleichen ausgebildet. Besonders bevorzugt ist das zumindest eine Verbindungselement beweglich mit dem Handhabungselement und/oder dem Plattformelement verbunden. Alternativ ist jedoch auch denkbar, dass das Plattformelement starr mit dem Handhabungselement verbunden ist. Es ist insbesondere auch denkbar, dass das Handhabungselement einstückig mit dem Plattformelement ausgebildet ist. Unter "einstückig" kann zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Das Halteelement ist insbesondere an dem Plattformelement gelagert, vorzugsweise drehbar gelagert. Beispielsweise ist das Halteelement als eine Ablage für Produkte zu einer Handhabung, insbesondere einem Transport, der Produkte ausgebildet. Es ist alternativ auch denkbar, dass das Halteelement als ein Greifer zu einem Greifen von Produkten, als ein Adapter zu einer, vorzugsweise lösbaren Verbindung, mit einem Greifer oder dergleichen, oder als ein anderes, einem Fachmann als sinnvoll erscheinendes Halteelement ausgebildet ist. Insbesondere in einem bevorzugten Ausführungsbeispiel ist das Plattformelement und/oder das Halteelement beabstandet zu dem Handhabungselement angeordnet. Bevorzugt ist das Handhabungselement plattenförmig ausgebildet. Es ist jedoch auch denkbar, dass das Handhabungselement eine andere, einem Fachmann als sinnvoll erscheinende Form aufweist. Das Halteelement und/oder das Plattformelement sind/ist in zumindest einem Betriebszustand der Handhabungseinheit beabstandet zu einer Haupterstreckungsebene des Handhabungselements angeordnet. Unter einer "Haupterstreckungsebene" einer Baueinheit oder eines Elements kann eine Ebene verstanden werden, welche parallel zu einer größten Seitenfläche eines kleinstmöglichen gedachten Quaders ist, welcher die Baueinheit gerade noch vollständig umschließt, und insbesondere durch den Mittelpunkt des Quaders verläuft.

Mittels der Orientierungseinheit ist insbesondere eine Drehbewegung des Halteelements relativ zu dem Handhabungselement und/oder dem Plattformelement erzeugbar. Eine durch die Orientierungseinheit erzeugbare Bewegung des Halteelements relativ zu dem Plattformelement und/oder dem Handhabungselement ist vorzugsweise verschieden von einer Translationsbewegung des Halteelements relativ zu dem Handhabungselement. Vorzugsweise ist durch die Orientierungseinheit eine Drehbewegung des Halteelements relativ zu dem Handhabungselement erzeugbar, um eine Winkelorientierung zwischen dem Halteelement und dem Handhabungselement einzustellen.

Durch die erfindungsgemäße Ausgestaltung der Handhabungsvorrichtung kann eine Handhabungseinheit zur Verfügung gestellt werden, die es ermöglicht, Drehmomente an das Halteelement zu übertragen, um eine Drehung des Halteelements relativ zu dem Handhabungselement zu erzeugen. Vorteilhaft können Produkte besonders flexibel gehandhabt werden. Vorteilhaft kann die Handhabungsvorrichtung besonders flexibel eingesetzt werden. Vorteilhaft kann eine Handhabungseinheit mit einem besonders großen Funktionsumfang zur Verfügung gestellt werden.

Erfindungsgemäß umfasst die Orientierungseinheit zumindest das Einstellelement, wobei durch eine Bewegung des Einstellelements relativ zu dem Handhabungselement die Winkelorientierung zwischen dem Handhabungselement und dem Halteelement einstellbar ist. Es ist denkbar, dass eine Winkelorientierung zwischen dem Handhabungselement und dem Halteelement durch eine Translationsbewegung und/oder eine Drehbewegung des Einstellelements relativ zu dem Handhabungselement erzeugbar ist. Das Einstellelement ist insbesondere beabstandet zu dem Plattformelement und/oder dem Halteelement angeordnet. Vorzugsweise ist das Einstellelement relativ zu dem Plattformelement bewegbar. Insbesondere ist das Einstellelement über zumindest ein weiteres Bauteil der Handhabungseinheit mechanisch mit dem Plattformelement, dem Handhabungselement und/oder dem Halteelement verbunden. Bevorzugt sind sämtliche Bauteile der Handhabungseinheit mechanisch miteinander verbunden. Vorzugsweise ist durch eine Bewegung des Einstellelements relativ zu dem Handhabungselement eine Winkelorientierung zwischen dem Handhabungselement und dem Halteelement stufenlos einstellbar. Vorteilhaft kann eine Winkelorientierung zwischen dem Halteelement und dem Handhabungselement besonders einfach und präzise eingestellt werden.

Erfindungsgemäß umfasst die Handhabungsvorrichtung die als Planarantrieb ausgebildete Antriebseinheit zu einem Antrieb des Einstellelements. Die Handhabungseinheit ist insbesondere zu einer Verwendung mit dem Planarantrieb vorgesehen. Die Handhabungsvorrichtung umfasst vorzugsweise zumindest eine Steuereinheit zu einer Ansteuerung der Antriebseinheit. Bevorzugt ist das Einstellelement als Mover ausgebildet. Insbesondere sind Mover durch die Antriebseinheit antreibbar. Das Handhabungselement ist bevorzugt als Lagerplatte ausgebildet. Es ist alternativ auch denkbar, dass das Handhabungselement als Mover ausgebildet ist. Es ist denkbar, dass das als Mover ausgebildete Handhabungselement durch die Antriebseinheit antreibbar ist. Vorzugsweise ist zumindest das Einstellelement in zumindest einem Betriebszustand in einem elektromagnetischen Feld zumindest im Wesentlichen reibungsfrei gelagert. Die Antriebseinheit ist insbesondere in dem Betriebszustand dazu vorgesehen, das elektromagnetische Feld zu erzeugen. Unter "vorgesehen" soll speziell eingerichtet, speziell ausgelegt und/oder speziell ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt. Die Antriebseinheit erzeugt bevorzugt zumindest in dem Betriebszustand elektromagnetische Kräfte für einen Antrieb der Handhabungseinheit, insbesondere des Einstellelements, und/oder für eine elektromagnetische Linearlagerung oder Levitation der Handhabungseinheit, insbesondere des Einstellelements, über eine, vorzugsweise elektrisch erregte, Antriebsfläche der Antriebseinheit. Das Einstellelement ist relativ zu der Antriebsfläche bewegbar, vorzugsweise durch einen Antrieb durch die Antriebseinheit. Mittels der Antriebseinheit ist vorzugsweise eine auf das Einstellelement wirkende Antriebskraft erzeugbar, insbesondere um eine Bewegung, bevorzugt eine Translationsbewegung und/oder eine Rotationsbewegung, des Einstellelements relativ zu der Antriebsfläche zu erzeugen. Das Einstellelement ist insbesondere in zwei Freiheitsgraden relativ zu der Antriebsfläche verschiebbar und/oder drehbar. Vorzugsweise ist das Einstellelement zumindest in dem Betriebszustand parallel zu der Antriebsfläche bewegbar, bevorzugt in einer zu der Antriebfläche parallel verlaufenden Bewegungsebene. Bevorzugt ist die Antriebseinheit dazu vorgesehen, das Einstellelement zu Bewegungen anzutreiben, die zumindest im Wesentlichen parallel zu der Antriebsfläche verlaufen. Unter "im Wesentlichen parallel" kann hier eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Das Einstellelement erzeugt vorzugsweise eine Kraft auf die Antriebsfläche. Das Einstellelement umfasst bevorzugt zumindest ein Magnetfelderzeugungselement zu einer Erzeugung eines Magnetfelds. Das Magnetfelderzeugungselement ist beispielsweise als ein Magnet, insbesondere ein Permanentmagnet, oder dergleichen ausgebildet. Das Magnetfelderzeugungselement ist insbesondere dazu vorgesehen, zu einem Antrieb des Einstellelements, mit der Antriebseinheit zusammenzuwirken. Beispielsweise erzeugt ein Zusammenwirken des zumindest einen Magnetfelderzeugungselements des Einstellelements mit der Antriebseinheit einen Luftspalt zwischen der Antriebsfläche und dem Einstellelement.

Vorzugsweise gilt die Beschreibung des Einstellelements bezüglich eines Antriebs durch die Antriebseinheit analog für weitere als Mover ausgebildete Bauteile der Handhabungsvorrichtung, insbesondere für das in zumindest einem Ausführungsbeispiel als Mover ausgebildete Handhabungselement. Alternativ ist auch denkbar, dass die Antriebseinheit als ein fluidbasierter Planarantrieb ausgebildet ist. Vorteilhaft kann eine Winkelorientierung zwischen dem Halteelement und dem Handhabungselement besonders komfortabel eingestellt werden. Vorteilhaft kann eine Winkelorientierung zwischen dem Halteelement und dem Handhabungselement zumindest teilweise automatisch durch eine Ansteuerung der Antriebseinheit eingestellt werden.

Ferner wird vorgeschlagen, dass durch eine Rotation des Einstellelements um eine Rotationsachse eine Winkelorientierung zwischen dem Handhabungselement und dem Halteelement einstellbar ist. Insbesondere ist die Antriebseinheit dazu vorgesehen, die Rotation des Einstellelements um die Rotationsachse zu erzeugen, um eine Winkelorientierung zwischen dem Handhabungselement und dem Halteelement einzustellen. Insbesondere ist durch eine Rotation des Einstellelements relativ zu dem Handhabungselement eine Winkelorientierung zwischen dem Halteelement und dem Handhabungselement einstellbar. Vorteilhaft kann eine besonders platzsparende Einstellung der Winkelorientierung zwischen dem Halteelement und dem Handhabungselement durch eine Bewegung des Einstellelements realisiert werden. Vorteilhaft kann eine besonders flexible Handhabung von Produkten mittels der Handhabungsvorrichtung erreicht werden.

Des Weiteren wird vorgeschlagen, dass die Rotationsachse zumindest im Wesentlichen senkrecht zu einer, insbesondere der zuvor bereits genannten, Bewegungsebene verläuft, in welcher das Einstellelement bewegbar ist. Unter "im Wesentlichen senkrecht" kann eine Ausrichtung einer Richtung relativ zu einer Bezugsrichtung verstanden werden, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere verläuft die Rotationsachse zumindest im Wesentlichen senkrecht zu der Antriebsfläche. Besonders bevorzugt verläuft die Rotationsachse genau senkrecht zu der Bewegungsebene und/oder der Antriebsfläche. Vorteilhaft kann eine Rotation des Einstellelements besonders einfach durch einen Planarantrieb erzeugt werden. Vorteilhaft kann eine besonders platzsparende Rotation des Einstellelements zu einer Einstellung einer Winkelorientierung zwischen dem Halteelement und dem Handhabungselement realisiert werden.

Außerdem wird vorgeschlagen, dass das Halteelement eine Drehachse aufweist, um welche das Halteelement zu einer Einstellung einer Winkelorientierung zwischen dem Handhabungselement und dem Halteelement drehbar ist, wobei die Drehachse winklig zu der Rotationsachse des Einstellelements verläuft. Insbesondere verläuft die Rotationsachse zu der Drehachse in einem Winkel, der größer ist als 0° und kleiner ist als 180°, bevorzugt größer ist als 45° und kleiner ist als 135°. Bevorzugt schneidet die Rotationsachse die Drehachse. Alternativ ist auch denkbar, dass die Rotationsachse frei von einem Schnittpunkt mit der Drehachse ist. Ferner ist alternativ denkbar, dass die Rotationsachse zumindest im Wesentlichen parallel zu der Drehachse verläuft, insbesondere beabstandet zu der Rotationsachse. Ferner ist alternativ auch denkbar, dass die Rotationsachse der Drehachse entspricht. Vorzugsweise ist eine Winkelstellung zwischen der Rotationsachse und der Drehachse fest. Alternativ ist auch denkbar, dass eine Winkelstellung der Rotationsachse zu der Drehachse einstellbar ist. Vorteilhaft kann die Handhabungseinheit besonders flexibel zu einer Handhabung von Produkten eingesetzt werden.

Weiterhin wird vorgeschlagen, dass ein, insbesondere der zuvor bereits genannte, Winkel zwischen der Drehachse und der Rotationsachse zumindest im Wesentlichen 90° beträgt. Darunter, dass ein Winkel zumindest im Wesentlichen einen Wert beträgt soll insbesondere verstanden werden, dass der Winkel von dem Wert weniger als 25 %, vorzugsweise weniger als 10 % und besonders bevorzugt weniger als 5 % des Werts abweicht. In einem bevorzugten Ausführungsbeispiel beträgt der Winkel zwischen der Drehachse und der Rotationsachse genau 90°. Vorzugsweise verläuft die Drehachse zumindest im Wesentlichen parallel zu der Antriebsfläche, insbesondere der Bewegungsebene, und/oder der Haupterstreckungsebene des Handhabungselements. Die Drehachse ist insbesondere frei von einem Schnittpunkt mit der Antriebsfläche und/oder dem Handhabungselement. Es ist jedoch alternativ auch denkbar, dass die Drehachse das Handhabungselement und/oder die Antriebsfläche schneidet. Vorzugsweise ist das Halteelement um die Drehachse unendlich rotierbar. Alternativ ist jedoch auch denkbar, dass ein maximaler Drehwinkelbereich des Halteelements um die Drehachse begrenzt ist, beispielsweise auf maximal 360°, 180°, 90° oder dergleichen. Vorteilhaft kann die Handhabungseinheit besonders flexibel zu einer Handhabung von Produkten eingesetzt werden.

Das Drehmomentübertragungselement ist vorzugsweise auf einer der Antriebsfläche abgewandten Seite an dem Einstellelement angeordnet. Es ist denkbar, dass das Drehmomentübertragungselement lösbar, vorzugsweise zerstörungsfrei lösbar, mit dem Einstellelement verbunden ist oder stoffschlüssig mit dem Einstellelement verbunden ist. Bevorzugt ist das Drehmomentübertragungselement drehfest mit dem Halteelement verbunden. Es ist denkbar, dass das Drehmomentübertragungselement lösbar, vorzugsweise zerstörungsfrei lösbar, mit dem Halteelement verbunden ist oder stoffschlüssig mit dem Halteelement verbunden ist. Es ist auch denkbar, dass das Halteelement einstückig mit dem Einstellelement und/oder dem Drehmomentübertragungselement ausgebildet ist. Vorteilhaft wird ein Drehmoment durch eine Bewegung, insbesondere eine Rotation, des Einstellelements besonders effizient übertragen, um eine Winkelorientierung zwischen dem Halteelement und dem Handhabungselement einzustellen.

Des Weiteren wird vorgeschlagen, dass das Handhabungselement, insbesondere in zumindest einem Ausführungsbeispiel, an dem Einstellelement gelagert ist. Vorzugsweise ist das Handhabungselement auf dem Einstellelement gelagert. Insbesondere ist das Handhabungselement über zumindest ein Lagerelement der Handhabungseinheit an dem Einstellelement gelagert. Das Lagerelement ist beispielsweise als ein Wälzlager, insbesondere ein Kugellager, oder dergleichen ausgebildet. Es ist auch denkbar, dass das Handhabungselement an dem Einstellelement gleitend gelagert ist. Vorzugsweise ist das Handhabungselement drehbar an dem Einstellelement gelagert. Insbesondere ist das Handhabungselement lediglich hinsichtlich Drehbewegungen relativ zu dem Einstellelement bewegbar. Vorteilhaft können Produkte besonders flexibel gehandhabt werden bei gleichzeitig besonders geringem Platzbedarf, insbesondere um eine Winkelorientierung zwischen dem Halteelement und dem Handhabungselement einzustellen.

Außerdem wird vorgeschlagen, dass die Handhabungseinheit zumindest ein weiteres Handhabungselement aufweist, welches das Handhabungselement bei einer Rotation des Einstellelements festhält. Vorzugsweise ist das weitere Handhabungselement relativ zu dem Handhabungselement und/oder dem Einstellelement bewegbar, vorzugsweise zumindest translatorisch. Das weitere Handhabungselement ist insbesondere beabstandet zu dem Handhabungselement und dem Einstellelement angeordnet. Vorzugsweise ist das weitere Handhabungselement, insbesondere in zumindest einem Ausführungsbeispiel, relativ zu dem Handhabungselement drehfest angeordnet. Die Handhabungseinheit weist vorzugsweise zumindest ein weiteres Verbindungselement auf, welches das weitere Handhabungselement, vorzugsweise mechanisch, mit dem Handhabungselement verbindet. Bevorzugt ist das weitere Verbindungselement als Strebe oder dergleichen ausgebildet. Vorzugsweise ist das weitere Handhabungselement zumindest über das zumindest eine weitere Verbindungselement relativ zu dem Handhabungselement drehfest angeordnet, insbesondere zumindest hinsichtlich Rotationen um Achsen, die zumindest im Wesentlichen parallel zu der Rotationsachse verlaufen. Bevorzugt ist das weitere Verbindungselement an dem weiteren Handhabungselement beweglich, vorzugsweise drehbar, angeordnet. Insbesondere ist das weitere Verbindungselement beweglich, vorzugsweise drehbar, relativ zu dem Handhabungselement. Besonders bevorzugt ist das weitere Handhabungselement über das weitere Verbindungselement mit dem Plattformelement verbunden. Insbesondere ist durch eine Translationsbewegung des weiteren Handhabungselements relativ zu dem Einstellelement und/oder dem Handhabungselement eine Translationsbewegung des Plattformelements und/oder des Halteelements relativ zu dem Handhabungselement erzeugbar. Vorzugsweise ist durch eine Bewegung, insbesondere eine Translationsbewegung, des weiteren Handhabungselements relativ zu dem Handhabungselement und/oder dem Einstellelement ein Abstand zwischen dem Handhabungselement und dem Plattformelement und/oder dem Halteelement einstellbar, insbesondere zumindest betrachtet in einer zu der Rotationsachse parallel verlaufenden Richtung. Das weitere Handhabungselement ist vorzugsweise als Mover ausgebildet. Das weitere Handhabungselement ist insbesondere durch die Antriebseinheit antreibbar. Alternativ ist auch denkbar, dass das weitere Handhabungselement als Lagerplatte oder dergleichen ausgebildet ist, die vorzugsweise auf einem weiteren Einstellelement der Handhabungseinheit angeordnet, vorzugsweise gelagert ist, wobei das weitere Einstellelement bevorzugt als Mover ausgebildet ist, der insbesondere durch die Antriebseinheit antreibbar ist. Es ist denkbar, dass die Handhabungseinheit zumindest ein weiteres Halteelement aufweist. Das weitere Einstellelement ist vorzugsweise zu einer Einstellung einer Winkelorientierung zwischen dem weiteren Halteelement und dem Handhabungselement und/oder dem weiteren Handhabungselement vorgesehen. Beispielsweise ist das weitere Halteelement an dem Plattformelement beweglich gelagert, insbesondere beabstandet zu dem Halteelement. Bevorzugt weist die Handhabungseinheit zumindest ein weiteres Drehmomentübertragungselement auf. Das weitere Drehmomentübertragungselement ist vorzugsweise drehfest mit dem weiteren Halteelement und dem weiteren Einstellelement verbunden. Es ist denkbar, dass das weitere Drehmomentübertragungselement lösbar, vorzugsweise zerstörungsfrei lösbar, oder einstückig mit dem weiteren Halteelement und/oder dem weiteren Einstellelement verbunden ist. Vorzugsweise ist durch eine Bewegung, insbesondere eine Rotation, des weiteren Einstellelements relativ zu dem weiteren Handhabungselement eine Winkelorientierung zwischen dem weiteren Halteelement und dem weiteren Handhabungselement und/oder dem Handhabungselement einstellbar. Eine Rotationsachse der Rotation des weiteren Einstellelements verläuft bevorzugt zumindest im Wesentlichen parallel zu der Rotationsachse des Einstellelements. Vorteilhaft kann vermieden werden, dass das Handhabungselement bei einer Rotation des Einstellelements mitrotiert. Vorteilhaft kann ein Drehmoment zu einer Einstellung einer Winkelorientierung zwischen dem Halteelement und dem Handhabungselement besonders effizient und zuverlässig übertragen werden.

Weiterhin wird vorgeschlagen, dass das Handhabungselement in zumindest einem Betriebszustand, vorzugsweise in zumindest einem alternativen Ausführungsbeispiel, separat zu dem Einstellelement angeordnet ist. Insbesondere ist das separat zu dem Einstellelement angeordnete Handhabungselement nicht auf dem Einstellelement gelagert. Insbesondere ist das Handhabungselement beabstandet zu dem Einstellelement angeordnet, vorzugsweise zumindest betrachtet in einer zu der Antriebsfläche und/oder der Bewegungsebene parallel verlaufenden Ebene. Bevorzugt ist das separat zu dem Handhabungselement angeordnete Einstellelement als Mover ausgebildet, der vorzugsweise durch die Antriebseinheit antreibbar ist. Vorteilhaft kann konstruktiv besonders einfach ein Drehmoment auf das Halteelement zu einer Einstellung einer Winkelorientierung zwischen dem Halteelement und dem Handhabungselement übertragen werden. Ferner geht die Erfindung von einem Verfahren zu einer Handhabung von Produkten mittels einer Handhabungsvorrichtung, insbesondere einer erfindungsgemäßen Handhabungsvorrichtung, welche zumindest eine, insbesondere die zuvor bereits genannte, Handhabungseinheit mit zumindest einem, insbesondere das zuvor bereits genannte, Handhabungselement und zumindest einem, insbesondere dem zuvor bereits genannten, Halteelement aufweist, welches relativ zu dem Handhabungselement beweglich gelagert ist, wobei eine Winkelorientierung zwischen dem Handhabungselement und dem Halteelement eingestellt wird, wobei die Winkelorientierung zwischen dem Handhabungselement und dem Halteelement durch eine Bewegung eines, insbesondere des bereits zuvor genannten, Einstellelements der Orientierungseinheit relativ zu dem Handhabungselement eingestellt wird, wobei das Einstellelement mittels einer als Planarantrieb ausgebildeten Antriebseinheit der Handhabungsvorrichtung angetrieben wird. Es wird vorgeschlagen, dass die Orientierungseinheit zumindest ein Drehmomentübertragungselement aufweist, welches drehfest mit dem Einstellelement verbunden ist, wobei durch eine Rotation des Einstellelements ein Drehmoment über das als Kardanwelle oder als flexible, insbesondere elastisch biegbare, Welle ausgebildete Drehmomentübertragungselement an das Halteelement übertragen wird. Vorteilhaft ist es möglich Drehmomente an das Halteelement zu übertragen, um eine Drehung des Halteelements relativ zu dem Handhabungselement zu erzeugen. Vorteilhaft können Produkte besonders flexibel gehandhabt werden.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Handhabungsvorrichtung zu einer Handhabung von Produkten in einer perspektivischen Darstellung,
- Fig. 2: einen Teil der Handhabungsvorrichtung in einer Draufsicht,
- Fig. 3: eine Querschnittsdarstellung der Handhabungsvorrichtung entlang der Linie A-A aus Figur 2,
- Fig. 4: einen schematischen Ablauf eines erfindungsgemäßen Verfahrens zu einer Handhabung von Produkten mittels der Handhabungsvorrichtung,
- Fig. 5: eine erfindungsgemäße Handhabungsvorrichtung zu einer Handhabung von Produkten in einer ersten alternativen Ausführung in einer perspektivischen Darstellung und
- Fig. 6: eine erfindungsgemäße Handhabungsvorrichtung zu einer Handhabung von Produkten in einer zweiten alternativen Ausführung in einer perspektivischen Darstellung.

### Beschreibung der Ausführungsbeispiele

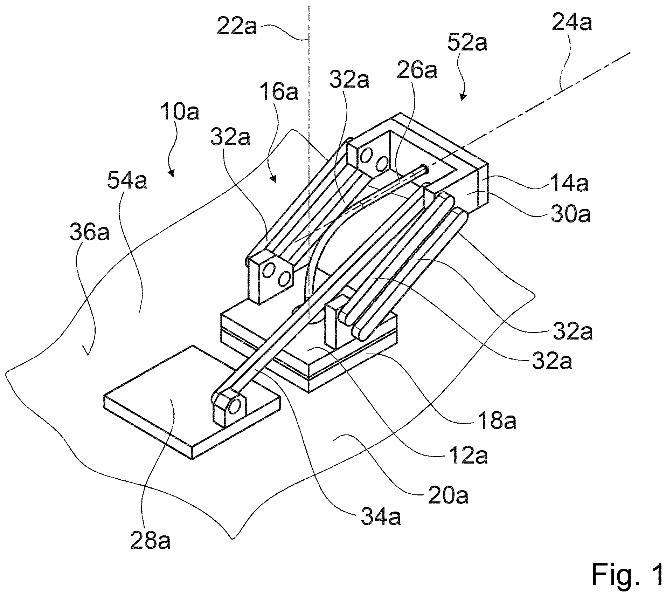

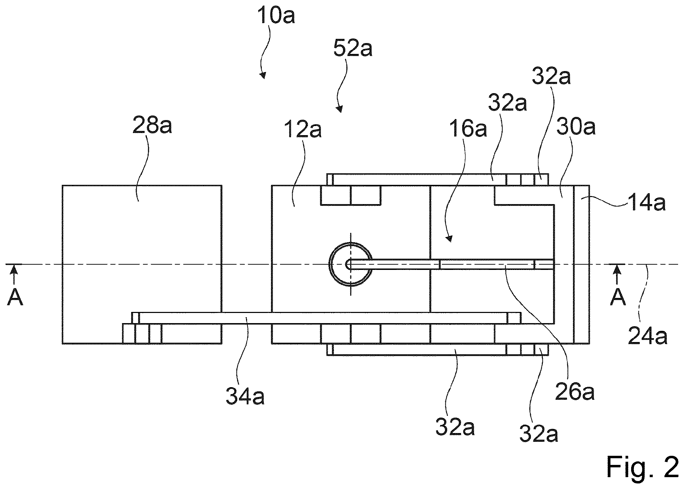

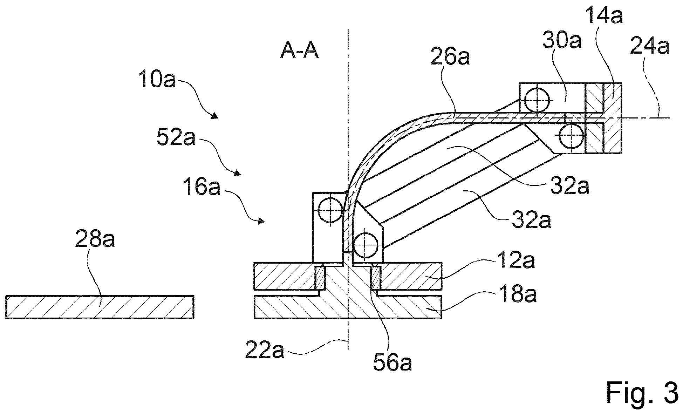

Figur 1 zeigt eine Handhabungsvorrichtung 10a zu einer Handhabung von Produkten. Die Handhabungsvorrichtung 10a umfasst zumindest eine Handhabungseinheit 52a (vgl. auch Figuren 2 und 3). Die Handhabungseinheit 52a ist dazu vorgesehen, Produkte zu transportieren, zu handhaben, beispielsweise zu drehen, zu greifen, zu heben, zu senken oder dergleichen und/oder zu bearbeiten. Die Handhabungseinheit 52a umfasst zumindest ein Handhabungselement 12a. Die Handhabungseinheit 52a umfasst zumindest ein Halteelement 14a. Das Halteelement 14a ist relativ zu dem Handhabungselement 12a beweglich gelagert. Das Halteelement 14a ist relativ zu dem Handhabungselement 12a drehbar. Das Halteelement 14a ist relativ zu dem Handhabungselement 12a translatorisch bewegbar.

Die Handhabungseinheit 52a umfasst zumindest ein Plattformelement 30a. Das Plattformelement 30a ist, insbesondere translatorisch, relativ zu dem Handhabungselement 12a bewegbar. Das Plattformelement 30a ist über vier Verbindungselemente 32a der Handhabungseinheit 52a, an dem Handhabungselement 12a, insbesondere translatorisch, gelagert. Es ist alternativ denkbar, dass die Handhabungseinheit 52a eine von vier verschiedene Anzahl an Verbindungselementen 32a aufweist, beispielsweise lediglich ein Verbindungselement 32a, zwei Verbindungselemente 32a, drei Verbindungselemente 32a oder mehr als vier Verbindungselemente 32a, über die das Plattformelement 30a mit dem Handhabungselement 12a verbunden ist. Die Verbindungselemente 32a sind als Streben ausgebildet. Alternativ ist jedoch auch denkbar, dass die Verbindungselemente 32a als andere, einem Fachmann als sinnvoll erscheinende Verbindungselemente 32a ausgebildet sind. Die Verbindungselemente 32a sind beweglich mit dem Handhabungselement 12a und/oder dem Plattformelement 30a verbunden.

Das Halteelement 14a ist an dem Plattformelement 30a gelagert, vorzugsweise drehbar gelagert. Beispielsweise ist das Halteelement 14a als eine Ablage für Produkte zu einer Handhabung, insbesondere einem Transport, der Produkte ausgebildet. Es ist alternativ auch denkbar, dass das Halteelement 14a als ein Greifer zu einem Greifen von Produkten, oder als ein Adapter zu einer Verbindung mit einem Greifer oder dergleichen ausgebildet ist oder als ein anderes, einem Fachmann als sinnvoll erscheinendes Halteelement 14a. Das Plattformelement 30a und/oder das Halteelement 14a sind/ist beabstandet zu dem Handhabungselement 12a angeordnet. Das Handhabungselement 12a ist plattenförmig ausgebildet. Es ist jedoch auch denkbar, dass das Handhabungselement 12a eine andere, einem Fachmann als sinnvoll erscheinende Form aufweist. Das Halteelement 14a und/oder das Plattformelement 30a sind/ist in zumindest einem Betriebszustand der Handhabungseinheit 52a beabstandet zu einer Haupterstreckungsebene des Handhabungselements 12a angeordnet.

Die Handhabungseinheit 52a umfasst zumindest eine Orientierungseinheit 16a, mittels welcher eine Winkelorientierung zwischen dem Handhabungselement 12a und dem Halteelement 14a einstellbar ist. Mittels der Orientierungseinheit 16a ist eine Drehbewegung des Halteelements 14a relativ zu dem Handhabungselement 12a erzeugbar. Mittels der Orientierungseinheit 16a ist eine Drehbewegung des Halteelements 14a relativ zu dem Plattformelement 30a erzeugbar. Eine durch die Orientierungseinheit 16a erzeugbare Bewegung des Halteelements 14a relativ zu dem Plattformelement 30a und/oder dem Handhabungselement 12a ist verschieden von einer Translationsbewegung des Halteelements 14a. Durch die Orientierungseinheit 16a ist eine Drehbewegung des Halteelements 14a relativ zu dem Handhabungselement 12a erzeugbar, um eine Winkelorientierung zwischen dem Halteelement 14a und dem Handhabungselement 12a einzustellen.

Die Orientierungseinheit 16a weist zumindest ein Einstellelement 18a auf. Durch eine Bewegung des Einstellelements 18a relativ zu dem Handhabungselement 12a ist eine Winkelorientierung zwischen dem Handhabungselement 12a und dem Halteelement 14a einstellbar. Eine Winkelorientierung zwischen dem Handhabungselement 12a und dem Halteelement 14a ist durch eine Drehbewegung des Einstellelements 18a relativ zu dem Handhabungselement 12a erzeugbar. Alternativ oder zusätzlich ist denkbar, dass das Einstellelement 18a derart mit dem Halteelement 14a verbunden ist, dass eine Winkelorientierung zwischen dem Handhabungselement 12a und dem Halteelement 14a durch eine Translationsbewegung des Einstellelements 18a relativ zu dem Handhabungselement 12a erzeugbar ist. Das Einstellelement 18a ist beabstandet zu dem Plattformelement 30a und/oder dem Halteelement 14a angeordnet. Das Einstellelement 18a ist relativ zu dem Plattformelement 30a bewegbar. Das Einstellelement 18a ist zumindest über das Handhabungselement 12a und die Verbindungselemente 32a mechanisch mit dem Plattformelement 30a und dem Halteelement 14a verbunden. Durch eine Bewegung des Einstellelements 18a relativ zu dem Handhabungselement 12a ist eine Winkelorientierung zwischen dem Handhabungselement 12a und dem Halteelement 14a stufenlos einstellbar.

Die Handhabungseinheit 52a ist zu einer Verwendung mit einem Planarantrieb vorgesehen. Die Handhabungsvorrichtung 10a umfasst zumindest eine Antriebseinheit 20a zu einem Antrieb des Einstellelements 18a. Die Antriebseinheit 20a ist als ein Planarantrieb ausgebildet. Die Handhabungsvorrichtung 10a umfasst zumindest eine Steuereinheit (hier nicht dargestellt) zu einer Ansteuerung der Antriebseinheit 20a. Das Einstellelement 18a ist als Mover ausgebildet. Mover sind insbesondere durch die Antriebseinheit 20a zu Bewegungen relativ zu einer Antriebsfläche 36a der Antriebseinheit 20a antreibbar.

Das Einstellelement 18a ist in zumindest einem Betriebszustand in einem elektromagnetischen Feld zumindest im Wesentlichen reibungsfrei gelagert. Die Antriebseinheit 20a ist in dem Betriebszustand dazu vorgesehen, das elektromagnetische Feld zu erzeugen. Die Antriebseinheit 20a erzeugt zumindest in dem Betriebszustand elektromagnetische Kräfte für einen Antrieb der Handhabungseinheit 52a, insbesondere des Einstellelements 18a, und/oder für eine elektromagnetische Linearlagerung oder Levitation der Handhabungseinheit 52a, insbesondere des Einstellelements 18a, über die, vorzugsweise elektrisch erregte, Antriebsfläche 36a der Antriebseinheit 20a. Alternativ ist auch denkbar, dass die Antriebseinheit 20a als ein fluidbasierter Planarantrieb ausgebildet ist.

Die Antriebseinheit 20a weist zumindest ein Plattenelement 54a auf. Vorzugsweise umfasst die Antriebseinheit 20a eine Vielzahl von Plattenelementen 54a, wobei die Plattenelemente 54a bevorzugt identisch ausgebildet sind oder alternativ voneinander verschieden ausgebildet sind (hier ist lediglich ein Plattenelement 54a schematisch dargestellt). Die Plattenelemente 54a der Vielzahl von Plattenelementen 54a liegen vorzugsweise aneinander an. Insbesondere bilden Plattenelemente 54a der Vielzahl von Plattenelementen 54a die Antriebsfläche 36a der Antriebseinheit 20a. Die Plattenelemente 54a weisen jeweils eine rechteckige oder eine quadratische Form auf (hier nicht dargestellt). Alternativ ist auch denkbar, dass die Plattenelemente 54a eine andere, einem Fachmann als sinnvoll erscheinende Form aufweisen.

Die Plattenelemente 54a umfassen jeweils eine Spuleneinheit (hier nicht dargestellt), eine Sensoreinheit (hier nicht dargestellt) sowie eine Elektronikeinheit (hier nicht dargestellt), insbesondere eine Leistungselektronikeinheit. Die Plattenelemente 54a sind jeweils schichtartig aufgebaut. Die Plattenelemente 54a weisen jeweils eine Spulenebene (hier nicht dargestellt), eine Sensorebene (hier nicht dargestellt) und/oder eine Leistungselektronikebene (hier nicht dargestellt) auf. Die jeweilige Spulenebene der Plattenelemente 54a ist von der jeweiligen Spuleneinheit gebildet. Die jeweilige Sensorebene der Plattenelemente 54a ist von der jeweiligen Sensoreinheit gebildet. Die jeweilige Leistungselektronikebene der Plattenelemente 54a ist von der jeweiligen Elektronikeinheit, insbesondere Leistungselektronikeinheit, gebildet. Alternativ ist auch denkbar, dass die Plattenelemente 54a jeweils einen von einem schichtartigen Aufbau verschiedenen, einem Fachmann als sinnvoll erscheinenden Aufbau aufweisen.

Die Handhabungsvorrichtung 10a umfasst eine Verbindungseinheit (hier nicht dargestellt), insbesondere ein Bussystem, welches die Plattenelemente 54a, insbesondere die Elektronikeinheiten, die Spuleneinheiten und/oder die Sensoreinheiten der Plattenelemente 54a mit der Steuereinheit verbindet, zumindest steuerungstechnisch. Die Handhabungsvorrichtung 10a weist insbesondere eine Energieversorgungseinheit (hier nicht dargestellt) auf, über welche die Plattenelemente 54a, vorzugsweise die Elektronikeinheiten, die Spuleneinheiten und/oder die Sensoreinheiten, mit elektrischer Energie versorgbar sind. Die Energieversorgungseinheit weist zu einer Übertragung von elektrischer Energie an die Plattenelemente 54a beispielsweise zumindest ein Kabel oder dergleichen auf. Die Steuereinheit umfasst zumindest einen Prozessor und ein Speicherelement sowie ein auf dem Speicherelement gespeichertes Betriebsprogramm. Das Speicherelement ist als digitales Speichermedium, beispielsweise als eine Festplatte oder dergleichen ausgebildet.

Das Einstellelement 18a ist relativ zu der Antriebsfläche 36a bewegbar, insbesondere durch einen Antrieb mittels der Antriebseinheit 20a. Mittels der Antriebseinheit 20a ist eine auf das Einstellelement 18a wirkende Antriebskraft erzeugbar, insbesondere um eine Bewegung, bevorzugt eine Translationsbewegung und/oder eine Rotationsbewegung, des Einstellelements 18a auf der Antriebsfläche zu erzeugen. Das Einstellelement 18a ist in zwei Freiheitsgraden relativ zu der Antriebsfläche 36a verschiebbar und/oder drehbar. Das Einstellelement 18a ist zumindest in dem Betriebszustand parallel zu der Antriebsfläche 36a bewegbar, insbesondere in einer zu der Antriebsfläche 36a parallel verlaufenden Bewegungsebene. Die Antriebseinheit 20a ist dazu vorgesehen, das Einstellelement 18a zu Bewegungen anzutreiben, die zumindest im Wesentlichen parallel zu der Antriebsfläche 36a verlaufen. Das Einstellelement 18a erzeugt eine Kraft auf die Antriebsfläche 36a. Das Einstellelement 18a umfasst zumindest ein Magnetfelderzeugungselement (hier nicht dargestellt) zu einer Erzeugung eines Magnetfelds. Das Magnetfelderzeugungselement ist beispielsweise als ein Magnet, insbesondere ein Permanentmagnet, oder dergleichen ausgebildet. Das Magnetfelderzeugungselement ist dazu vorgesehen, zu einem Antrieb des Einstellelements 18a, mit zumindest einer der Spuleneinheiten der Antriebseinheit 20a zusammenzuwirken. Beispielsweise erzeugt ein Zusammenwirken des zumindest einen Magnetfelderzeugungselements des Einstellelements 18a mit der Antriebseinheit 20a einen Luftspalt zwischen der Antriebsfläche 36a und dem Einstellelement 18a.

Durch eine Rotation des Einstellelements 18a um eine Rotationsachse 22a ist eine Winkelorientierung zwischen dem Handhabungselement 12a und dem Halteelement 14a einstellbar. Die Antriebseinheit 20a ist dazu vorgesehen, die Rotation des Einstellelements 18a um die Rotationsachse 22a, insbesondere relativ zu dem Handhabungselement 12a, zu erzeugen, um eine Winkelorientierung zwischen dem Handhabungselement 12a und dem Halteelement 14a einzustellen. Die Rotationsachse 22a verläuft zumindest im Wesentlichen senkrecht zu der Bewegungsebene, in welcher das Einstellelement 18a bewegbar ist. Die Rotationsachse 22a verläuft zumindest im Wesentlichen senkrecht zu der Antriebsfläche 36a.

Das Halteelement 14a weist eine Drehachse 24a auf, um welche das Halteelement 14a zu einer Einstellung einer Winkelorientierung zwischen dem Handhabungselement 12a und dem Halteelement 14a drehbar ist, wobei die Drehachse 24a winklig zu der Rotationsachse 22a des Einstellelements 18a verläuft. Die Rotationsachse 22a verläuft zu der Drehachse 24a in einem Winkel, der größer ist als 0° und kleiner ist als 180°, bevorzugt größer als 45° und kleiner als 135°. Die Rotationsachse 22a schneidet die Drehachse 24a. Alternativ ist auch denkbar, dass die Rotationsachse 22a frei von einem Schnittpunkt mit der Drehachse 24a ist. Ferner ist alternativ denkbar, dass die Rotationsachse 22a zumindest im Wesentlichen parallel zu der Drehachse 24a verläuft, insbesondere beabstandet zu der Rotationsachse 22a. Ferner ist alternativ auch denkbar, dass die Rotationsachse 22a der Drehachse 24a entspricht.

Ein Winkel zwischen der Drehachse 24a und der Rotationsachse 22a beträgt zumindest im Wesentlichen 90°. Besonders bevorzugt beträgt der Winkel zwischen der Drehachse 24a und der Rotationsachse 22a genau 90°. Die Drehachse 24a verläuft zumindest im Wesentlichen parallel zu der Antriebsfläche 36a, insbesondere der Bewegungsebene, und/oder der Haupterstreckungsebene des Handhabungselements 12a. Die Drehachse 24a ist frei von einem Schnittpunkt mit der Antriebsfläche 36a und/oder dem Handhabungselement 12a. Es ist jedoch alternativ auch denkbar, dass die Drehachse 24a das Handhabungselement 12a und/oder die Antriebsfläche 36a schneidet. Das Halteelement 14a ist um die Drehachse 24a unendlich rotierbar. Alternativ ist jedoch auch denkbar, dass ein maximaler Drehwinkelbereich des Halteelements 14a um die Drehachse 24a begrenzt ist, beispielsweise auf maximal 360°, 180°, 90° oder dergleichen.

Die Orientierungseinheit 16a weist zumindest ein Drehmomentübertragungselement 26a auf, welches drehfest mit dem Einstellelement 18a verbunden ist. Das Drehmomentübertragungselement 26a ist auf einer der Antriebsfläche 36a abgewandten Seite an dem Einstellelement 18a angeordnet. Es ist denkbar, dass das Drehmomentübertragungselement 26a lösbar, vorzugsweise zerstörungsfrei lösbar, mit dem Einstellelement 18a verbunden ist oder stoffschlüssig mit dem Einstellelement 18a verbunden ist. Das Drehmomentübertragungselement 26a ist als flexible, insbesondere elastisch biegbare, Welle ausgebildet. Alternativ ist auch denkbar, dass das Drehmomentübertragungselement 26a als Kardanwelle, als starr ausgebildete Welle oder als ein anderes, einem Fachmann als sinnvoll erscheinendes Drehmomentübertragungselement 26a ausgebildet ist. Das Drehmomentübertragungselement 26a ist drehfest mit dem Halteelement 14a verbunden. Es ist denkbar, dass das Drehmomentübertragungselement 26a lösbar, vorzugsweise zerstörungsfrei lösbar, mit dem Halteelement 14a verbunden ist oder stoffschlüssig mit dem Halteelement 14a verbunden ist. Es ist auch denkbar, dass das Halteelement 14a einstückig mit dem Einstellelement 18a und/oder dem Drehmomentübertragungselement 26a ausgebildet ist.

Das Handhabungselement 12a ist als Lagerplatte ausgebildet. Das Handhabungselement 12a ist an dem Einstellelement 18a gelagert. Das Handhabungselement 12a ist auf dem Einstellelement 18a gelagert. Das Handhabungselement 12a ist über zumindest ein Lagerelement 56a der Handhabungseinheit 52a an dem Einstellelement 18a gelagert (vgl. Figur 3). Das Lagerelement 56a ist beispielsweise als ein Wälzlager, insbesondere ein Kugellager, oder dergleichen ausgebildet. Es ist alternativ auch denkbar, dass das Handhabungselement 12a an dem Einstellelement 18a gleitend gelagert ist. Das Handhabungselement 12a ist drehbar an dem Einstellelement 18a gelagert. Das Handhabungselement 12a ist lediglich hinsichtlich Drehbewegungen relativ zu dem Einstellelement 18a bewegbar.

Die Handhabungseinheit 52a umfasst zumindest ein weiteres Handhabungselement 28a, welches das Handhabungselement 12a bei einer Rotation des Einstellelements 18a festhält. Das weitere Handhabungselement 28a ist relativ zu dem Handhabungselement 12a und dem Einstellelement 18a translatorisch bewegbar. Das weitere Handhabungselement 28a ist relativ zu dem Einstellelement 18a drehbar. Das weitere Handhabungselement 12a ist zu dem Handhabungselement 12a drehfest angeordnet, insbesondere zumindest hinsichtlich Rotationen um Achsen, die zumindest im Wesentlichen parallel zu der Rotationsachse 22a verlaufen. Die Handhabungseinheit 52a weist zumindest ein weiteres Verbindungselement 34a auf, welches das weitere Handhabungselement 28a, vorzugsweise mechanisch, mit dem Handhabungselement 12a verbindet. Das weitere Verbindungselement 34a ist als Strebe ausgebildet. Alternativ ist auch denkbar, dass das weitere Verbindungselement 34a als ein anderes, einem Fachmann als sinnvoll erscheinendes Verbindungselement ausgebildet ist. Das weitere Verbindungselement 34a ist an dem weiteren Handhabungselement 28a beweglich, vorzugsweise drehbar, angeordnet. Das weitere Verbindungselement 34a ist beweglich, vorzugsweise drehbar, relativ zu dem Handhabungselement 12a. Das weitere Handhabungselement 28a ist über das weitere Verbindungselement 34a mit dem Plattformelement 30a verbunden. Durch eine Translationsbewegung des weiteren Handhabungselements 28a relativ zu dem Handhabungselement 12a ist eine Translationsbewegung des Plattformelements 30a und/oder des Halteelements 14a relativ zu dem Handhabungselement 12a erzeugbar. Das weitere Handhabungselement 28a ist als Mover ausgebildet. Das weitere Handhabungselement 28a ist durch die Antriebseinheit 20a antreibbar. Durch eine Bewegung, insbesondere eine Translationsbewegung, des weiteren Handhabungselements 28a relativ zu dem Handhabungselement 12a ist ein Abstand zwischen dem Handhabungselement 12a und dem Plattformelement 30a und/oder dem Halteelement 14a einstellbar, insbesondere zumindest betrachtet in einer zu der Rotationsachse 22a parallel verlaufenden Richtung.

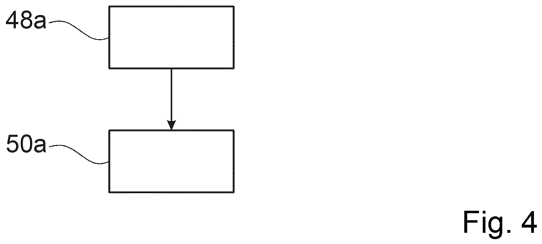

Figur 4 zeigt einen schematischen Ablauf eines Verfahrens zu einer Handhabung von Produkten mittels der Handhabungsvorrichtung 10a. Die Winkelorientierung zwischen dem Handhabungselement 12a und dem Halteelement 14a wird, insbesondere in zumindest einem Verfahrensschritt 48a, eingestellt, vorzugsweise mittels der Orientierungseinheit 16a. Das Einstellelement 18a wird durch die Antriebseinheit 20a zu einer Rotation um die Rotationsachse 22a angetrieben. Durch die Rotation des Einstellelements 18a wird ein Drehmoment über das Drehmomentübertragungselement 26a an das Halteelement 14a übertragen. Es ist denkbar, dass das Drehmoment übersetzungsfrei übertragen wird. Alternativ ist auch denkbar, dass das Drehmoment bei einer Übertragung an das Halteelement 14a übersetzt wird.

Insbesondere wird das Einstellelement 18a, vorzugsweise in einem weiteren Verfahrensschritt 50a, zu einer translatorischen Bewegung, vorzugsweise relativ zu der Antriebsfläche 36a, bevorzugt in der Bewegungsebene, durch die Antriebseinheit 20a angetrieben. Durch die translatorische Bewegung des Einstellelements 18a wird das Handhabungselement 12a translatorisch bewegt. Es ist auch denkbar, dass, beispielsweise in dem Verfahrensschritt 48a oder in dem Verfahrensschritt 50a, das weitere Handhabungselement 28a mittels der Antriebseinheit 20a zu einer translatorischen Bewegung relativ zu dem Handhabungselement 12a angetrieben wird. Durch eine translatorische Bewegung des weiteren Handhabungselements 28a relativ zu dem Handhabungselement 12a wird insbesondere eine translatorische Bewegung des Plattformelements 30a und/oder des Halteelements 14a relativ zu dem Handhabungselement 12a erzeugt. Durch eine translatorische Bewegung des weiteren Handhabungselements 28a relativ zu dem Handhabungselement 12a wird ein Abstand zwischen dem Handhabungselement 12a und dem Plattformelement 30a geändert, insbesondere zumindest betrachtet in der zu der Rotationsachse 22a parallel verlaufenden Richtung.

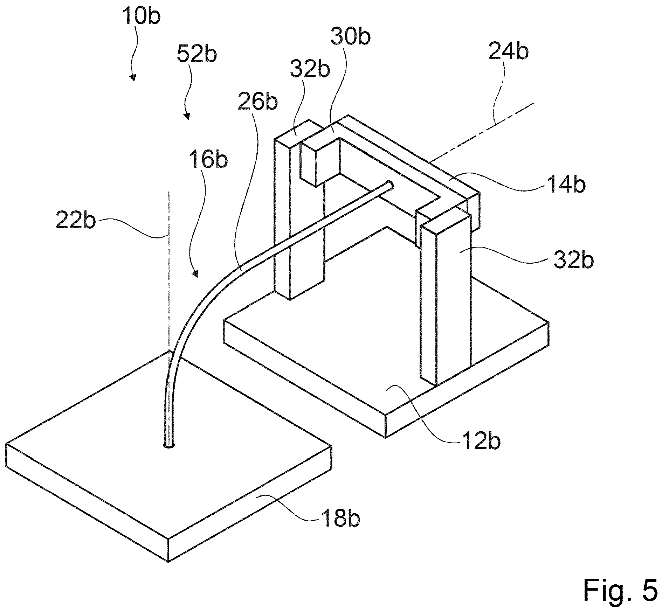

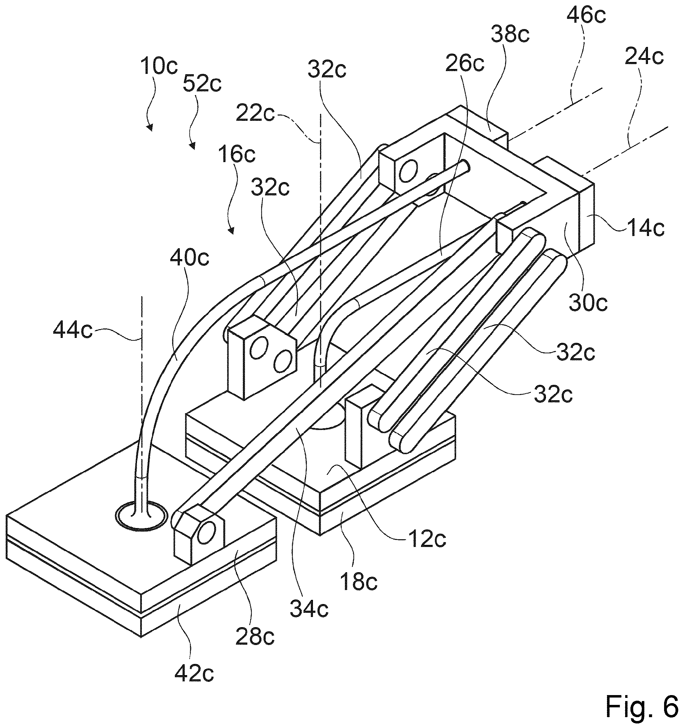

In den Figuren 5 und 6 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 und 6 ist der Buchstabe a durch die Buchstaben b und c ersetzt.

Figur 5 zeigt eine Handhabungsvorrichtung 10b zu einer Handhabung von Produkten. Die Handhabungsvorrichtung 10b umfasst zumindest eine Handhabungseinheit 52b. Die Handhabungseinheit 52b umfasst zumindest ein Handhabungselement 12b. Die Handhabungseinheit 52b umfasst zumindest ein Halteelement 14b. Das Halteelement 14b ist relativ zu dem Handhabungselement 12b beweglich gelagert. Die Handhabungseinheit 52b umfasst zumindest eine Orientierungseinheit 16b, mittels welcher eine Winkelorientierung zwischen dem Handhabungselement 12b und dem Halteelement 14b einstellbar ist.

Das Halteelement 14b ist relativ zu dem Handhabungselement 12b lediglich drehbar gelagert. Die Handhabungseinheit 52b umfasst zumindest ein Plattformelement 30b. Das Plattformelement 30b ist starr mit dem Handhabungselement 12b verbunden ist. Das Plattformelement 30b ist über zwei Verbindungselemente 32b der Handhabungseinheit 52b starr mit dem Handhabungselement 12b verbunden. Alternativ ist auch denkbar, dass die Handhabungseinheit 52b eine von zwei verschiedene Anzahl von Verbindungselementen 32b aufweist, beispielsweise lediglich ein Verbindungselement 32b oder mehr als zwei Verbindungselemente 32b, über welche/s das Plattformelement 30b starr mit dem Handhabungselement 12b verbunden ist. Es ist auch denkbar, dass das Handhabungselement 12b einstückig mit dem Plattformelement 30b ausgebildet ist.

Das Handhabungselement 12b ist in zumindest einem Betriebszustand separat zu einem Einstellelement 18b der Handhabungseinheit 52b angeordnet. Das separat zu dem Einstellelement 18b angeordnete Handhabungselement 12b ist nicht auf dem Einstellelement 18b gelagert. Das Handhabungselement 12b ist beabstandet zu dem Einstellelement 18b angeordnet, vorzugsweise zumindest betrachtet in einer zu einer Antriebsfläche (hier nicht dargestellt) einer Antriebseinheit (hier nicht dargestellt) der Handhabungsvorrichtung 10b und/oder einer Bewegungsebene des Einstellelements 18b parallel verlaufenden Ebene. Das separat zu dem Handhabungselement 12b angeordnete Einstellelement 18b ist als Mover ausgebildet, der vorzugsweise durch die Antriebseinheit 20b antreibbar ist. Die Handhabungseinheit 52b weist ein Drehmomentübertragungselement 26b auf, welches drehfest mit dem Einstellelement 18b und dem Halteelement 14b verbunden ist. Durch eine Rotation des Einstellelements 18b um eine Rotationsachse 22b relativ zu dem Handhabungselement 12b ist eine Winkelorientierung zwischen dem Halteelement 14b und dem Handhabungselement 12b einstellbar. Eine Drehachse 24b des Halteelements 14b verläuft zumindest im Wesentlichen senkrecht zu der Rotationsachse 22b.

Figur 6 zeigt eine Handhabungsvorrichtung 10c zu einer Handhabung von Produkten. Die Handhabungsvorrichtung 10c umfasst zumindest eine Handhabungseinheit 52c. Die Handhabungseinheit 52c umfasst zumindest ein Handhabungselement 12c. Die Handhabungseinheit 52c umfasst zumindest ein Halteelement 14c. Das Halteelement 14c ist relativ zu dem Handhabungselement 12c beweglich gelagert. Die Handhabungseinheit 52c umfasst zumindest eine Orientierungseinheit 16c, mittels welcher eine Winkelorientierung zwischen dem Handhabungselement 12c und dem Halteelement 14c einstellbar ist.

Das Halteelement 14c ist relativ zu dem Handhabungselement 12c translatorisch bewegbar und drehbar. Die Handhabungseinheit 52c umfasst zumindest ein Plattformelement 30c. Das Plattformelement 30c ist über vier Verbindungselemente 32c der Handhabungseinheit 52c beweglich mit dem Handhabungselement 12b verbunden. Es ist alternativ denkbar, dass die Handhabungseinheit 52c eine von vier verschiedene Anzahl an Verbindungselementen 32c aufweist, beispielsweise lediglich ein Verbindungselement 32c, zwei Verbindungselemente 32c, drei Verbindungselemente 32c oder mehr als vier Verbindungselemente 32c, über die das Plattformelement 30c mit dem Handhabungselement 12c verbunden ist. Das Halteelement 14c ist drehbar an dem Plattformelement 30c gelagert.

Durch eine Rotation eines Einstellelements 18c um eine Rotationsachse 22c relativ zu dem Handhabungselement 12c ist über ein Drehmomentübertragungselement 26c der Handhabungseinheit 52c eine Winkelorientierung zwischen dem Halteelement 14c und dem Handhabungselement 12c einstellbar. Das Einstellelement 18c ist als Mover ausgebildet und durch eine Antriebseinheit (hier nicht dargestellt) der Handhabungsvorrichtung 10c zu einer Bewegung, insbesondere relativ zu einer Antriebsfläche (hier nicht dargestellt) der Antriebseinheit, antreibbar. Das Handhabungselement 12c ist auf dem Einstellelement 18c gelagert.

Die Handhabungseinheit 52c umfasst zumindest ein weiteres Handhabungselement 28c, welches als Lagerplatte ausgebildet ist. Das weitere Handhabungselement 28c ist auf einem weiteren Einstellelement 42c der Handhabungseinheit 52c angeordnet. Das weitere Handhabungselement 28c ist drehbar auf dem weiteren Einstellelement 42c gelagert. Das weitere Einstellelement 42c ist als Mover ausgebildet, der insbesondere durch die Antriebseinheit antreibbar ist.

Die Handhabungseinheit 52c weist zumindest ein weiteres Verbindungselement 34c auf, welches das weitere Handhabungselement 28c, vorzugsweise mechanisch, mit dem Handhabungselement 12c verbindet. Das weitere Verbindungselement 34c ist als Strebe ausgebildet. Alternativ ist auch denkbar, dass das weitere Verbindungselement 34c als ein anderes, einem Fachmann als sinnvoll erscheinendes Verbindungselement ausgebildet ist. Das weitere Verbindungselement 34c ist an dem weiteren Handhabungselement 28c beweglich, vorzugsweise drehbar, angeordnet. Das weitere Handhabungselement 28c ist über das weitere Verbindungselement 34c mit dem Plattformelement 30c verbunden. Durch eine Translationsbewegung des weiteren Handhabungselements 28a relativ zu dem Handhabungselement 12c ist eine Translationsbewegung des Plattformelements 30c relativ zu dem Handhabungselement 12c erzeugbar. Durch eine Bewegung, insbesondere eine Translationsbewegung, des weiteren Handhabungselements 28c relativ zu dem Handhabungselement 12c ist ein Abstand zwischen dem Handhabungselement 12c und dem Plattformelement 30c einstellbar, insbesondere zumindest betrachtet in einer zu der Rotationsachse 22c parallel verlaufenden Richtung.

Die Handhabungseinheit 52c umfasst zumindest ein weiteres Halteelement 38c. Das weitere Einstellelement 42c ist zu einer Einstellung einer Winkelorientierung zwischen dem weiteren Halteelement 38c und der Handhabungselement 12c und/oder der weiteren Handhabungselement 28c vorgesehen. Das weitere Halteelement 38c ist an dem Plattformelement 30c drehbar gelagert, insbesondere beabstandet zu dem Halteelement 14c. Die Handhabungseinheit 52c weist zumindest ein weiteres Drehmomentübertragungselement 40c auf. Das weitere Drehmomentübertragungselement 40c ist drehfest mit dem weiteren Halteelement 38c und dem weiteren Einstellelement 42c verbunden. Es ist denkbar, dass das weitere Drehmomentübertragungselement 40c lösbar, vorzugsweise zerstörungsfrei lösbar, oder einstückig mit dem weiteren Halteelement 38c und/oder dem weiteren Einstellelement 42c verbunden ist. Durch eine Bewegung, insbesondere eine Rotation, des weiteren Einstellelements 42c relativ zu dem weiteren Handhabungselement 28c ist eine Winkelorientierung zwischen dem weiteren Halteelement 38c und dem weiteren Handhabungselement 28c und/oder dem Handhabungselement 12c einstellbar. Durch eine Rotation des weiteren Einstellelements 42c ist eine Drehung des weiteren Halteelements 38c um eine Drehachse 46c erzeugbar, insbesondere um eine Winkelorientierung zwischen dem weiteren Halteelement 38c und dem weiteren Handhabungselement 28c einzustellen. Eine Rotationsachse 44c der Rotation des weiteren Einstellelements 42c verläuft zumindest im Wesentlichen parallel zu der Rotationsachse 22c des Einstellelements 18c. Die Drehachse 46c verläuft zumindest im Wesentlichen parallel zu der Drehachse 24c. Die Drehachse 46c verläuft zumindest im Wesentlichen senkrecht zu der Rotationsachse 22c und/oder der Rotationachse 44c.

## Patentansprüche

1. Handhabungsvorrichtung (10a; 10b; 10c) zu einer Handhabung von Produkten, mit zumindest einer Handhabungseinheit (52a; 52b; 52c), die zumindest ein Handhabungselement (12a; 12b; 12c) und zumindest ein Halteelement (14a; 14b; 14c) aufweist, welches relativ zu dem Handhabungselement (12a; 12b; 12c) beweglich gelagert ist, wobei die Handhabungseinheit (52a; 52b; 52c) eine Orientierungseinheit (16a; 16b; 16c) umfasst, mittels welcher eine Winkelorientierung zwischen dem Handhabungselement (12a; 12b; 12c) und dem Halteelement (14a; 14b; 14c) einstellbar ist, wobei die Orientierungseinheit (16a; 16b; 16c) zumindest ein Einstellelement (18a; 18b; 18c) aufweist, wobei durch eine Bewegung des Einstellelements (18a; 18b; 18c) relativ zu dem Handhabungselement (12a; 12b; 12c) die Winkelorientierung zwischen dem Handhabungselement (12a; 12b; 12c) und dem Halteelement (14a; 14b; 14c) einstellbar ist, und mit einer als Planarantrieb ausgebildeten Antriebseinheit (20a; 20b; 20c) zu einem Antrieb des Einstellelements (18a; 18b; 18c), **dadurch gekennzeichnet, dass** die Orientierungseinheit (16a; 16b; 16c) zumindest ein Drehmomentübertragungselement (26a; 26b; 26c) aufweist, welches drehfest mit dem Einstellelement (18a; 18b; 18c) verbunden ist, wobei das Drehmomentübertragungselement (26a; 26b; 26c) als Kardanwelle oder als flexible, insbesondere elastisch biegbare, Welle ausgebildet ist.

2. Handhabungsvorrichtung (10a; 10b; 10c) nach Anspruch 1, **dadurch gekennzeichnet, dass** durch eine Rotation des Einstellelements (18a; 18b; 18c) um eine Rotationsachse (22a; 22b; 22c) eine Winkelorientierung zwischen dem Handhabungselement (12a; 12b; 12c) und dem Halteelement (14a; 14b; 14c) einstellbar ist.

3. Handhabungsvorrichtung (10a; 10b; 10c) nach Anspruch 2, **dadurch gekennzeichnet, dass** die Rotationsachse (22a; 22b; 22c) zumindest im Wesentlichen senkrecht zu einer Bewegungsebene verläuft, in welcher das Einstellelement (18a; 18b; 18c) bewegbar ist.

4. Handhabungsvorrichtung (10a; 10b; 10c) nach Anspruch 2 oder 3,
**dadurch gekennzeichnet, dass** das Halteelement (14a; 14b; 14c) eine Drehachse (24a; 24b; 24c) aufweist, um welche das Halteelement (14a; 14b; 14c) zu einer Einstellung einer Winkelorientierung zwischen dem Handhabungselement (12a; 12b; 12c) und dem Halteelement (14a; 14b; 14c) drehbar ist, wobei die Drehachse (24a; 24b; 24c) winklig zu der Rotationsachse (22a; 22b; 22c) des Einstellelements (18a; 18b; 18c) verläuft.

5. Handhabungsvorrichtung (10a; 10b; 10c) nach Anspruch 4, **dadurch gekennzeichnet, dass** ein Winkel zwischen der Drehachse (24a; 24b; 24c) und der Rotationsachse (22a; 22b; 22c) zumindest im Wesentlichen 90° beträgt.

6. Handhabungsvorrichtung (10a; 10b; 10c) nach einem der vorhergehenden Ansprüche, **dadurch gekennzeichnet, dass** das Handhabungselement (12a; 12c) an dem Einstellelement (18a; 18c) gelagert ist.

7. Handhabungsvorrichtung (10a; 10c) nach Anspruch 6, **dadurch gekennzeichnet, dass** die Handhabungseinheit (52a; 52c) zumindest ein weiteres Handhabungselement (28a; 28c) aufweist, welches das Handhabungselement (12a; 12c) bei einer Rotation des Einstellelements (18a; 18c) festhält.

8. Handhabungsvorrichtung (10b) nach einem der Ansprüche 1 bis 5,
**dadurch gekennzeichnet, dass** das Handhabungselement (12b) in zumindest einem Betriebszustand separat zu dem Einstellelement (18b) angeordnet ist.

9. Verfahren zu einer Handhabung von Produkten mittels einer Handhabungsvorrichtung (10a; 10b; 10c), insbesondere nach einem der vorhergehenden Ansprüche, welche zumindest eine Handhabungseinheit (52a; 52b; 52c) mit zumindest einem Handhabungselement (12a; 12b; 12c) und zumindest einem Halteelement (14a; 14b; 14c) aufweist, welches relativ zu dem Handhabungselement (12a; 12b; 12c) beweglich gelagert ist, wobei eine Winkelorientierung zwischen dem Handhabungselement (12a; 12b; 12c) und dem Halteelement (14a; 14b; 14c) eingestellt wird, wobei die Winkelorientierung zwischen dem Handhabungselement (12a; 12b; 12c) und dem Halteelement (14a; 14b; 14c) durch eine Bewegung eines Einstellelements (18a; 18b; 18c) der Orientierungseinheit (16a; 16b; 16c) relativ zu dem Handhabungselement (12a; 12b; 12c) eingestellt wird, wobei das Einstellelement (18a; 18b; 18c) mittels einer als Planarantrieb ausgebildeten Antriebseinheit (20a; 20b; 20c) der Handhabungsvorrichtung (10a; 10b; 10c) angetrieben wird, **dadurch gekennzeichnet, dass** die Orientierungseinheit (16a; 16b; 16c) zumindest ein Drehmomentübertragungselement (26a; 26b; 26c) aufweist, welches drehfest mit dem Einstellelement (18a; 18b; 18c) verbunden ist, wobei durch eine Rotation des Einstellelements (18a; 18b; 18c) ein Drehmoment über das als Kardanwelle oder als flexible, insbesondere elastisch biegbare, Welle ausgebildete Drehmomentübertragungselement (26a; 26b; 26c) an das Halteelement (14a; 14b; 14c) übertragen wird.

## Claims

1. Handling device (10a; 10b; 10c) for handling products, comprising at least one handling unit (52a; 52b; 52c) which has at least one handling element (12a; 12b; 12c) and at least one holding element (14a; 14b; 14c) which is mounted so as to be movable relative to the handling element (12a; 12b; 12c), the handling unit (52a; 52b; 52c) having an orientation unit (16a; 16b; 16c), by means of which an angular orientation between the handling element (12a; 12b; 12c) and the holding element (14a; 14b; 14c) can be adjusted, the orientation unit (16a; 16b; 16c) having at least one adjustment element (18a; 18b; 18c), the angular orientation between the handling element (12a; 12b; 12c) and the holding element (14a; 14b; 14c) being adjustable by a movement of the adjustment element (18a; 18b; 18c) relative to the handling element (12a; 12b; 12c), and comprising a drive unit (20a; 20b; 20c) designed as a planar drive for driving the adjustment element (18a; 18b; 18c), **characterized in that** the orientation unit (16a; 16b; 16c) has at least one torque transmission element (26a; 26b; 26c) which is connected to the adjustment element (18a; 18b; 18c) for conjoint rotation, the torque transmission element (26a; 26b; 26c) being designed as a cardan shaft or as a flexible, in particular elastically bendable, shaft.

2. Handling device (10a; 10b; 10c) according to claim 1,
**characterized in that** by rotating the adjustment element (18a; 18b; 18c) about a rotation axis (22a; 22b; 22c), an angular orientation between the handling element (12a; 12b; 12c) and the holding element (14a; 14b; 14c) can be adjusted.

3. Handling device (10a; 10b; 10c) according to claim 2,
**characterized in that** the rotation axis (22a; 22b; 22c) runs at least substantially perpendicularly to a plane of movement in which the adjustment element (18a; 18b; 18c) is movable.

4. Handling device (10a; 10b; 10c) according to either claim 2 or claim 3, **characterized in that** the holding element (14a; 14b; 14c) has an axis of rotation (24a; 24b; 24c) about which the holding element (14a; 14b; 14c) is rotatable to adjust an angular orientation between the handling element (12a; 12b; 12c) and the holding element (14a; 14b; 14c), the axis of rotation (24a; 24b; 24c) running at an angle to the rotation axis (22a; 22b; 22c) of the adjustment element (18a; 18b; 18c).

5. Handling device (10a; 10b; 10c) according to claim 4,
**characterized in that** an angle between the axis of rotation (24a; 24b; 24c) and the rotation axis (22a; 22b; 22c) is at least substantially 90°.

6. Handling device (10a; 10b; 10c) according to any of the preceding claims, **characterized in that** the handling element (12a; 12c) is mounted on the adjustment element (18a; 18c).

7. Handling device (10a; 10c) according to claim 6, **characterized in that** the handling unit (52a; 52c) has at least one further handling element (28a; 28c) which holds the handling element (12a; 12c) during rotation of the adjustment element (18a; 18c).

8. Handling device (10b) according to any of claims 1 to 5,
**characterized in that** the handling element (12b) is arranged separately from the adjustment element (18b) in at least one operating state.

9. Method for handling products by means of a handling device (10a; 10b; 10c), in particular according to any of the preceding claims, which handling device has at least one handling unit (52a; 52b; 52c) having at least one handling element (12a; 12b; 12c) and at least one holding element (14a; 14b; 14c) which is mounted so as to be movable relative to the handling element (12a; 12b; 12c), an angular orientation between the handling element (12a; 12b; 12c) and the holding element (14a; 14b; 14c) being adjusted, the angular orientation between the handling element (12a; 12b; 12c) and the holding element (14a; 14b; 14c) being adjusted by a movement of an adjustment element (18a; 18b; 18c) of the orientation unit (16a; 16b; 16c) relative to the handling element (12a; 12b; 12c), the adjustment element (18a; 18b; 18c) being driven by means of a drive unit (20a; 20b; 20c) of the handling device (10a; 10b; 10c) designed as a planar drive,
**characterized in that** the orientation unit (16a; 16b; 16c) has at least one torque transmission element (26a; 26b; 26c) which is connected to the adjustment element (18a; 18b; 18c) for conjoint rotation, a rotation of the adjustment element (18a; 18b; 18c) transmitting a torque to the holding element (14a; 14b; 14c) via the torque transmission element (26a; 26b; 26c) designed as a cardan shaft or as a flexible, in particular elastically bendable, shaft.

## Revendications

1. Dispositif de manipulation (10a ; 10b ; 10c) pour une manipulation de produits, comportant au moins une unité de manipulation (52a ; 52b ; 52c) qui présente au moins un élément de manipulation (12a ; 12b ; 12c) et au moins un élément de retenue (14a ; 14b ; 14c), lequel est monté mobile par rapport à l'élément de manipulation (12a ; 12b ; 12c), l'unité de manipulation (52a ; 52b ; 52c) comprenant une unité d'orientation (16a ; 16b ; 16c) à l'aide de laquelle une orientation angulaire entre l'élément de manipulation (12a ; 12b ; 12c) et l'élément de retenue (14a ; 14b ; 14c) peut être réglée, l'unité d'orientation (16a ; 16b ; 16c) présentant au moins un élément de réglage (18a ; 18b ; 18c), l'orientation angulaire entre l'élément de manipulation (12a ; 12b ; 12c) et l'élément de retenue (14a ; 14b ; 14c) pouvant être réglée par un déplacement de l'élément de réglage (18a ; 18b ; 18c) par rapport à l'élément de manipulation (12a ; 12b ; 12c), et comportant une unité d'entraînement (20a ; 20b ; 20c) réalisée sous forme d'entraînement plan pour un entraînement de l'élément de réglage (18a ; 18b ; 18c), **caractérisé en ce que** l'unité d'orientation (16a ; 16b ; 16c) présente au moins un élément de transmission de couple (26a ; 26b ; 26c), lequel est relié de manière solidaire en rotation à l'élément de réglage (18a ; 18b ; 18c), l'élément de transmission de couple (26a ; 26b ; 26c) étant réalisé sous forme d'arbre à cardan ou sous forme d'arbre souple, en particulier flexible élastiquement.

2. Dispositif de manipulation (10a ; 10b ; 10c) selon la revendication 1, **caractérisé en ce que,** par une rotation de l'élément de réglage (18a ; 18b ; 18c) autour d'un axe de rotation (22a ; 22b ; 22c), une orientation angulaire entre l'élément de manipulation (12a ; 12b ; 12c) et l'élément de retenue (14a ; 14b ; 14c) peut être réglée.

3. Dispositif de manipulation (10a ; 10b ; 10c) selon la revendication 2, **caractérisé en ce que** l'axe de rotation (22a ; 22b ; 22c) s'étend au moins sensiblement perpendiculairement à un plan de déplacement dans lequel l'élément de réglage (18a ; 18b ; 18c) est déplaçable.

4. Dispositif de manipulation (10a ; 10b ; 10c) selon la revendication 2 ou 3, **caractérisé en ce que** l'élément de retenue (14a ; 14b ; 14c) présente un axe de pivotement (24a ; 24b ; 24c) autour duquel l'élément de retenue (14a ; 14b ; 14c) peut pivoter pour un réglage d'une orientation angulaire entre l'élément de manipulation (12a ; 12b ; 12c) et l'élément de retenue (14a ; 14b ; 14c), l'axe de pivotement (24a ; 24b ; 24c) s'étendant de manière angulaire par rapport à l'axe de rotation (22a ; 22b ; 22c) de l'élément de réglage (18a ; 18b ; 18c).

5. Dispositif de manipulation (10a ; 10b ; 10c) selon la revendication 4, **caractérisé en ce qu'**un angle entre l'axe de pivotement (24a ; 24b ; 24c) et l'axe de rotation (22a ; 22b ; 22c) est au moins sensiblement de 90°.

6. Dispositif de manipulation (10a ; 10b ; 10c) selon l'une des revendications précédentes, **caractérisé en ce que** l'élément de manipulation (12a ; 12c) est monté sur l'élément de réglage (18a ; 18c).

7. Dispositif de manipulation (10a ; 10c) selon la revendication 6, **caractérisé en ce que** l'unité de manipulation (52a ; 52c) présente au moins un autre élément de manipulation (28a ; 28c), lequel immobilise l'élément de manipulation (12a ; 12c) lors d'une rotation de l'élément de réglage (18a ; 18c).

8. Dispositif de manipulation (10b) selon l'une des revendications 1 à 5, **caractérisé en ce que** l'élément de manipulation (12b) est disposé séparément de l'élément de réglage (18b) dans au moins un état de fonctionnement.

9. Procédé pour une manipulation de produits à l'aide d'un dispositif de manipulation (10a ; 10b ; 10c), en particulier selon l'une des revendications précédentes, lequel présente au moins une unité de manipulation (52a ; 52b ; 52c) comportant au moins un élément de manipulation (12a ; 12b ; 12c) et au moins un élément de retenue (14a ; 14b ; 14c), lequel est monté mobile par rapport à l'élément de manipulation (12a ; 12b ; 12c), une orientation angulaire entre l'élément de manipulation (12a ; 12b ; 12c) et l'élément de retenue (14a ; 14b ; 14c) étant réglée, l'orientation angulaire entre l'élément de manipulation (12a ; 12b ; 12c) et l'élément de retenue (14a ; 14b ; 14c) étant réglée par un déplacement d'un élément de réglage (18a ; 18b ; 18c) de l'unité d'orientation (16a ; 16b ; 16c) par rapport à l'élément de manipulation (12a ; 12b ; 12c), l'élément de réglage (18a ; 18b ; 18c) étant entraîné à l'aide d'une unité d'entraînement (20a ; 20b ; 20c), réalisée sous forme d'entraînement plan, du dispositif de manipulation (10a ; 10b ; 10c), **caractérisé en ce que** l'unité d'orientation (16a ; 16b ; 16c) présente au moins un élément de transmission de couple (26a ; 26b ; 26c), lequel est relié de manière solidaire en rotation à l'élément de réglage (18a ; 18b ; 18c), un couple étant transmis à l'élément de retenue (14a ; 14b ; 14c) par l'intermédiaire de l'élément de transmission de couple (26a ; 26b ; 26c) réalisé sous forme d'arbre à cardan ou sous forme d'arbre souple, en particulier flexible élastiquement, par une rotation de l'élément de réglage (18a ; 18b ; 18c).
